# EUROPÄISCHE PATENTSCHRIFT

(11) **EP 3 916 965 B1**
(45) Veröffentlichungstag und Bekanntmachung des Hinweises auf die Patenterteilung: **03.12.2025**
(21) Anmeldenummer: 21165086.6
(22) Anmeldetag: 26.03.2021
(51) Int. Cl.: H02K 5/08, H02K 5/10, H02K 5/22

(54) **ELEKTRISCHE MASCHINE UND VERFAHREN ZUR HERSTELLUNG EINER ELEKTRISCHEN MASCHINE**
ELECTRICAL MACHINE AND METHOD FOR MANUFACTURING AN ELECTRICAL MACHINE
MACHINE ÉLECTRIQUE ET PROCÉDÉ DE FABRICATION D'UNE MACHINE ÉLECTRIQUE

(30) Priorität: 28.05.2020 DE 102020114309
(43) Veröffentlichungstag der Anmeldung: 01.12.2021
(73) Patentinhaber: ebm-papst Mulfingen GmbH & Co. KG, 74673 Mulfingen (DE)
(72) Erfinder: Braun, Felix, 74544 Michelbach/Bilz (DE); Dobric, Silvana, 74673 Mulfingen (DE)
(74) Vertreter: RavensPAT Patentanwälte Partnerschaft mbB

(56) Entgegenhaltungen:
- DE-A1- 102004 004 227
- DE-A1- 102009 013 363
- DE-A1- 102012 023 477
- DE-A1- 102017 118 125

## Beschreibung

Die Erfindung betrifft eine Elektrische Maschine gemäß dem Oberbegriff des Anspruchs 1 sowie eine Verfahren zur Herstellung einer elektrischen Maschine gemäß dem Oberbegriff des Anspruchs 9.

Aus der DE 197 27 164 A1 ist eine elektrische Maschine bekannt, welche eine Statorbuchse, eine Vergusswanne, eine Vergussmasse und einen Stator umfasst, wobei die Vergusswanne einen kreisringartigen Boden, eine erste, umlaufende äußere Wandung und eine zweite umlaufende innere Wandung umfasst.

Weiterhin ist aus der DE 10 2012 023 477 A1 ein Schaltelement für einen Elektromotor, mit Leiterbahnen bekannt, die in einen aus Kunststoff bestehenden Grundkörper eingebettet und mit Kontakten für eine Statorwicklung versehen sind, die über eine Seite des Grundkörpers ragen, wobei das Schaltelement über die andere Seite des Grundkörpers ragende weitere Kontakte aufweist, die mit zugehörigen Leiterbahnen elektrisch leitend verbunden sind, und wobei ein äußerer Rand und/oder ein Rand einer Durchtrittsöffnung als Dichtrand ausgebildet ist.

Schließlich ist aus der DE 10 2004 004 227 A1 ein kollektorloser, elektronisch kommutierter Gleichstrommotor, mit einem Stator und einem den Stator von einer Seite her als Teil eines Motorgehäuses topfartig umschließenden Außenläufer sowie einem sich als weiterer Teil des Motorgehäuses auf der dem Außenläufer axial gegenüberliegenden Seite anschließenden, eine Steuerelektronik enthaltenden Elektronikgehäuse bekannt, wobei axial zwischen einem Wickelkopf des Stators und einer sich quer zu einer Läuferachse erstreckenden Bodenwandung des Elektronikgehäuses ein im Wesentlichen scheibenförmiger Wickelkopfschutz zur Abdichtung von Anschluss-Durchführungen der Bodenwandung angeordnet ist, wobei der Wickelkopfschutz mindestens eine in Richtung des Wickelkopfes vorspringende Aufnahmetasche für einen magnetfeldempfindlichen Drehstellungssensor derart aufweist, dass der durch eine Durchführung der Bodenwandung mit der Steuerelektronik verbundene und in der in Richtung des Wickelkopfes geschlossenen Aufnahmetasche sitzende Drehstellungssensor zur Erfassung eines Magnetfeldes des Außenläufers hinreichend nah an diesen angeordnet ist.

Der Erfindung liegt die Aufgabe zugrunde, eine elektrische Maschine und ein Verfahren zur Herstellung einer elektrischen Maschine zu entwickeln, welche durch ihre Vergusswanne und ihre Vergussmasse optimal geschützt ist bzw. welches einen optimalen Schutz durch eine Vergusswanne und Vergussmasse bei gleichzeitig einfachem Herstellungsvorgang erlaubt.

Diese Aufgabe wird ausgehend von den Merkmalen des Oberbegriffs des Anspruchs 1 bzw. 9 durch die kennzeichnenden Merkmale des Anspruchs 1 bzw. 9 gelöst. In den jeweiligen Unteransprüchen sind vorteilhafte und zweckmäßige Weiterbildungen angegeben.

Die erfindungsgemäße elektrische Maschine, welche insbesondere als Elektromotor oder insbesondere als Generator ausgebildet ist, umfasst eine Statorbuchse, eine Vergusswanne, eine Vergussmasse und einen Stator, wobei die Vergusswanne einen kreisringartigen Boden, eine erste, umlaufende äußere Wandung und eine zweite umlaufende innere Wandung umfasst, wobei die Vergusswanne eine dritte, zwischen der äußeren Wandung und der inneren Wandung umlaufende mittlere Wandung umfasst, wobei die Vergussmasse in einem Füllraum aufgenommen ist und wobei der Füllraum zwischen der mittleren Wandung und der inneren Wandung ausgebildet ist. Weiterhin ist es vorgesehen, dass die innere Wandung der Vergusswanne an einem Schaltringe aufnehmenden unteren Flansch des Stators derart anliegt, dass eine ringförmige Innenwandung des Flansches eine Erhöhung der inneren Wandung bildet, so dass der Füllraum bis über eine Oberkante der inneren Wandung mit der Vergussmasse, insbesondere derart hoch befüllt ist, dass die Schaltringe vollständig in die Vergussmasse eingebettet sind. Hierdurch wird ein optimaler Schutz der Schaltringe erzielt. Hierdurch ist es möglich, die Vergusswanne sowohl als Abdeckkappe als auch als mit auf die Anforderungen angepasstem Füllraum für eine Vergussmasse auszubilden, so dass ein optimaler Schutz der übrigen Komponenten der elektrischen Maschine realisiert ist. Weiterhin lässt sich hierdurch an der Vergusswanne Material einsparen.

Es ist weiterhin vorgesehen, den Füllraum und den Stator derart aufeinander anzupassen, dass ein Maschinenkontaktsystem des Stators in dem Füllraum aufgenommen und von der Vergussmasse umgeben ist. Hierdurch wird ein umfassender Schutz des Maschinenkontaktsystems durch einen Vergussprozess erreicht.

Weiterhin ist es vorgesehen, dass das Maschinenkontaktsystem Schaltringe des Stators und/oder Schweißanbindungen von Wicklung des Stators und/oder Statorwicklungen des Stators und/oder Schaltbrücken und/oder Motorkontakte umfasst. Der Schutz wenigstens einer dieser Komponenten und insbesondere aller genannten Komponenten erhöht die Lebensdauer der elektrischen Maschine bei gleichzeitig einfacher Herstellung.

Es ist auch vorgesehen, die Vergusswanne als Zwei-Komponenten-Bauteil auszubilden, den Boden, die äußere Wandung, einen Kern der mittleren Wandung und die innere Wandung als Hartkomponente auszubilden und einen den Kern der mittleren Wandung umgebenden Mantel als Weichkomponente auszubilden, wobei die Weichkomponente insbesondere durch Umspritzen des Kerns hergestellt ist und wobei die Weichkomponente gummiartig elastisch verformbar ist. Durch ein derartiges Zwei-Komponenten-Bauteil ist die Teilezahl der elektrischen Maschine reduziert, da auf eine ein zusätzliches Bauteil darstellende Dichtung verzichtet werden kann. Weiterhin ist der Herstellungsprozess des Vergießens mit Vergussmasse vereinfacht, da auf ein Umsetzen und damit ein Vergießen mit zwei aufeinanderfolgenden Vergussschritten verzichtet werden kann, so dass der Vergussprozess rationalisiert ist.

Es ist auch vorgesehen, die Vergusswanne zwischen der inneren Wandung und der mittleren Wandung in einem Boden mit einer Öffnung auszubilden, wobei die Vergusswanne als weitere Weichkomponente eine Dichtung für Motorkontakte umfasst, wobei die Öffnung durch die Dichtung verschlossen ist und wobei die Dichtung insbesondere formschlüssig mit dem Boden verbunden ist und wobei es insbesondere auch vorgesehen ist, dass die Dichtung und der die mittlere Wandung umgebende Mantel miteinander verbunden sind. Hierdurch ist eine optimale Abdichtung der Vergusswanne im Bereich der Motorkontakte erreicht, so dass unterhalb der Vergusswanne zu den Motorkontakten ein Auslaufen von Vergussmasse zuverlässig vermieden ist und somit auch kein Reinigungsaufwand entsteht. Weiterhin bewirkt eine einteilige Ausführung der Dichtung und der mittleren Wandung, dass die Dichtung besonders zuverlässig in der Öffnung gehalten ist, da diese zusätzlich von der mittleren Wandung und nicht nur von einem umlaufenden Rand der Öffnung getragen ist.

Es ist auch vorgesehen, dass die mittleren Wandung bei Ansicht in Richtung einer Längsachse der elektrischen Maschine eine zahnradartige Kontur aufweist und wenigstens zwei, insbesondere symmetrisch zu der Längsachse ausgebildete zahnartige Ausbuchtungen aufweist, wobei sich der Füllraum in dieses Ausbuchtungen erstreckt. Über diese Ausbuchtungen ist eine einfache Zuführung der Vergussmasse von vier Seiten möglich. Hierbei ist es insbesondere auch vorgesehen, dass die mittlere Wandung im Bereich der Ausbuchtungen erhöht ist. Dadurch ist das Einfüllen erleichtert und ein ungewünschtes Überlaufen verhindert, wenn sich die Vergussmasse beim Einfüllen kurzzeitig leicht anstaut.

Schließlich ist es vorgesehen, dass ein oberer Flansch des Stators, die Statorbuchse und eine Oberseite der Statorbleche einen ringförmigen Füllraum bilden, wobei der ringförmige Füllraum mit Vergussmasse derart ausgegossen ist, dass die Oberseite der Statorbleche durch die Vergussmasse überdeckt ist und wobei es insbesondere vorgesehen ist, dass der obere Flansch des Stators mit dem unteren Flansch des Stators einteilig, insbesondere als Ummantelung der Statorbleche in Form einer Umspritzung ausgebildet ist. Hierdurch sind die Statorbleche auch von oben geschützt, so dass ein noch umfassender Schutz der elektrischen Maschine realisiert ist.

Das erfindungsgemäße Verfahren zur Herstellung einer elektrischen Maschine, welche eine Statorbuchse, eine Vergusswanne und einen Stator umfasst, umfasst die Schritte:
- Aufsetzen der Vergusswanne auf die Statorbuchse,
- Aufpressen des Stators auf die Statorbuchse, derart, dass die Vergussewanne zwischen der Statorbuchse und dem Stator gehalten ist und ein Maschinenkontaktsystem des Stators in einen zwischen einer inneren Wandung und einer mittleren Wandung der Vergusswanne ausgebildeten Füllraum eingeschoben werden,
- Ausgießen des Füllraums mit einer Vergussmasse derart, dass das Maschinenkontaktsystem des Stators in die Vergussmasse eingebettet wird.

Hierbei ist es auch vorgesehen, dass das Maschinenkontaktsystem durch Schaltringe des Stators und Schweißanbindungen von Statorwicklungen und Statorwicklungen des Stators und Schaltbrücken und Motorkontakte gebildet wird.

Ein derartiges Verfahren ermöglicht eine rasche, unkomplizierte und eine Vielzahl von elektrischen Komponenten umfassende Herstellung eines Motorschutzes. Ein derartig zusammengesetztes Maschinenkontaktsystem ermöglicht einen umfassenden Schutz der elektrischen Maschine.

Weiterhin ist es vorgesehen, dass die Statorwicklungen mit Vergussmasse übergossen werden und dass ein zusätzlicher Füllraum mit Vergussmasse gefüllt wird. Hierdurch wird der Draht der Statorwicklungen zusätzlich geschützt, so dass ein Abschaben des den Draht ummantelnden Isolierlacks durch Vibrationen vermieden wird. Dies ist insbesondere bei einer Verwendung der elektrischen Maschine im Fahrzeugbau von Vorteil. Weiterhin wird auch das Statorblech zusätzlich geschützt.

Schließlich ist es vorgesehen, die elektrische Maschine entsprechend wenigstens einem der Ansprüche 1 bis 8 auszubilden. Hierdurch bringt diese die zu den jeweiligen Ansprüchen genannten Vorteile mit.

Weitere Einzelheiten der Erfindung werden in der Zeichnung anhand von schematisch dargestellten Ausführungsbeispielen beschrieben.

Hierbei zeigt:
- Figur 1a:: eine Schnittansicht durch Komponenten einer erfindungsgemäßen elektrischen Maschine;
- Figur 1b:: eine Detailansicht der Figur 1a im Bereich der linken Hälfte der Vergusswanne;
- Figur 2:: eine perspektivische Ansicht der in der Figur 1 im Schnitt gezeigten Vergusswanne zusammen mit der Vergussmasse,
- Figur 3:: eine zweite perspektivische Ansicht der in der Figur 1 im Schnitt gezeigten Vergusswanne ohne Vergussmasse und ohne Schaltringe, wobei hier eine Dichtung für Motorkontakte sichtbar ist und
- Figur 4:: eine dritte perspektivische Ansicht der Vergusswanne, wobei diese gegenüber den Darstellungen der Figuren 2 und 3 etwa um 180° gewendet ist, so dass die Dichtung für Motorkontakte von unten sichtbar ist.

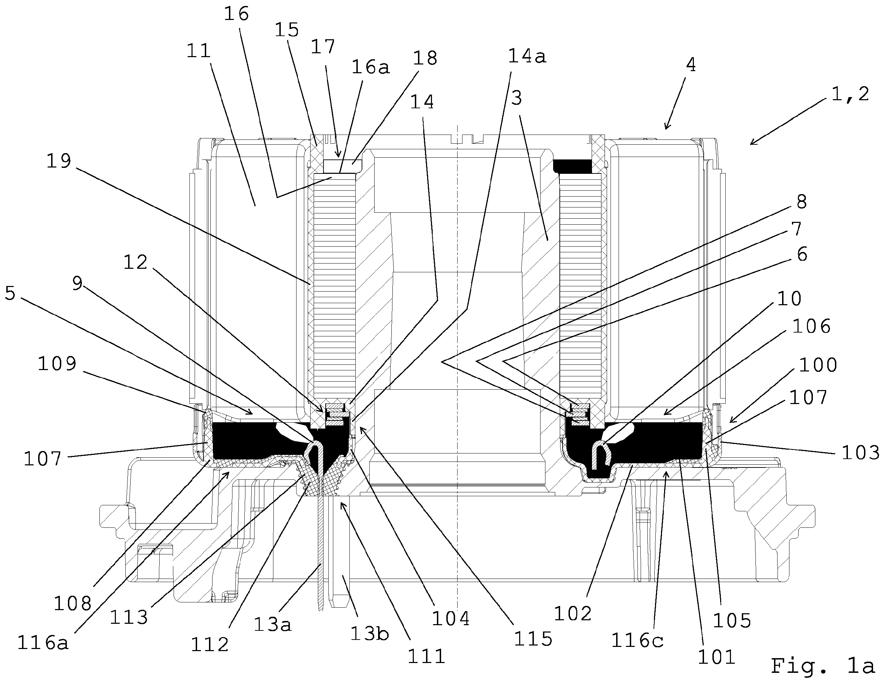

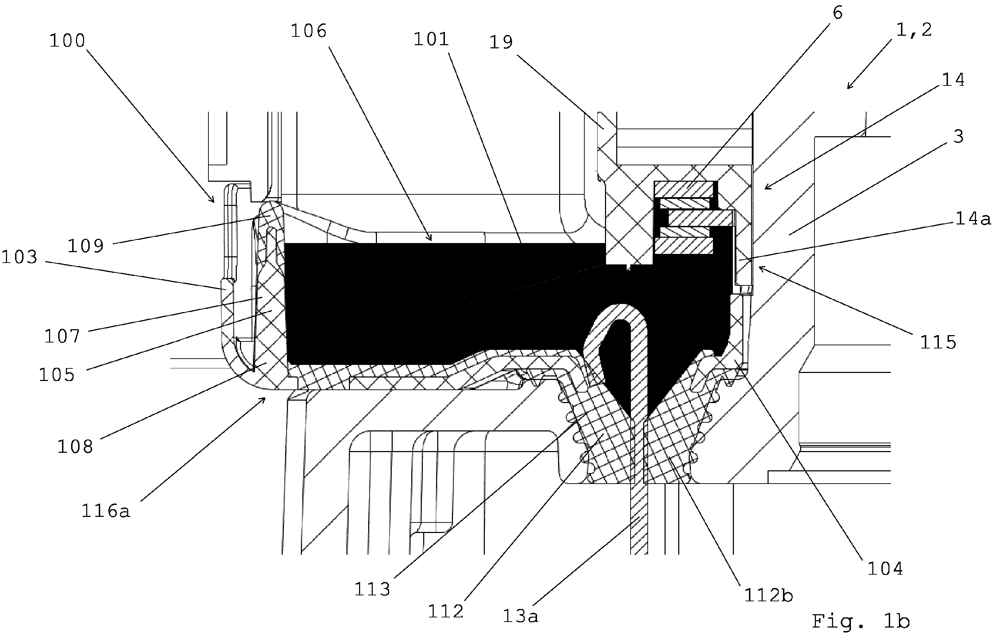

In der Figur 1a sind Komponenten einer erfindungsgemäßen elektrischen Maschine 1 in geschnittener Seitenansicht gezeigt. Die elektrische Maschine 1 ist als Elektromotor 2 ausgebildet, wobei der Elektromotor 2 nicht vollständig dargestellt ist. Die elektrische Maschine 1 umfasst eine Statorbuchse 3, eine Vergusswanne 100, eine Vergussmasse 101 und einen Stator 4. Die Figur 1b zeigt eine Detailansicht der Figur 1a im Bereich der linken Hälfte der Vergusswanne 100.

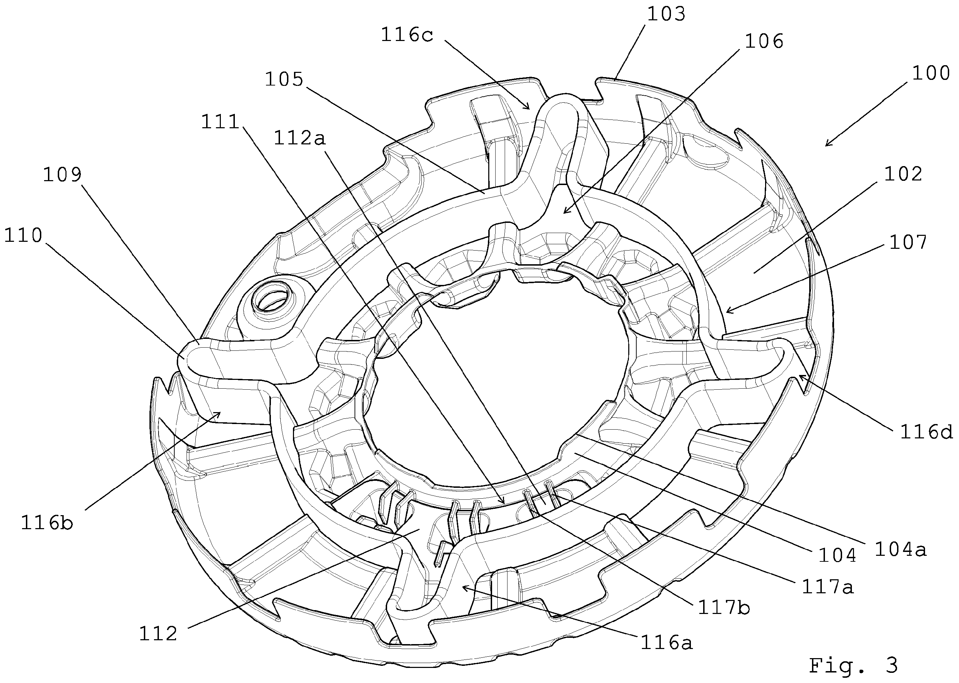

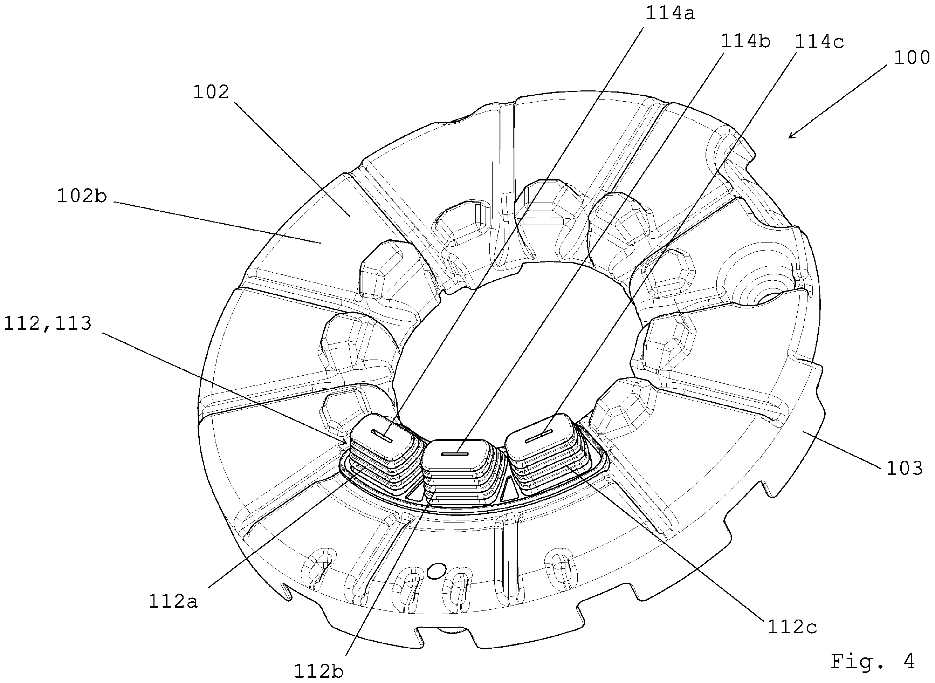

Die Vergusswanne 100 ist in den Figur 3 und 4 frei von Vergussmasse in einem Zustand dargestellt, welche diese zum Zusammenbau der elektrischen Maschine 1 vor einem Vergießen mit der Vergussmasse 101 aufweist.

Die Vergusswanne 100 umfasst einen kreisringartigen Boden 102, eine erste, umlaufende äußere Wandung 103, eine zweite, umlaufende innere Wandung 104 und eine dritte, zwischen der äußeren Wandung 103 und der inneren Wandung 104 umlaufende mittlere Wandung 105 (siehe insbesondere Figur 3).

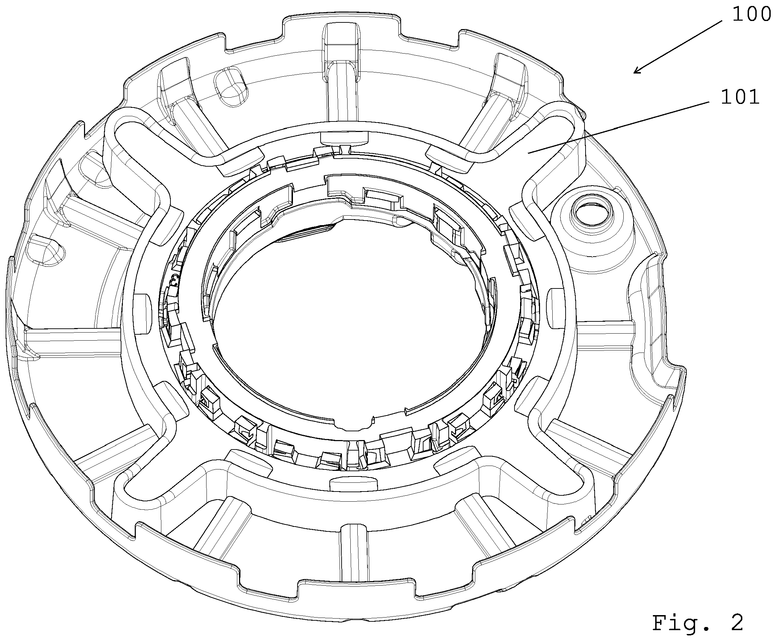

In der Figur 2 ist die Vergusswanne 100 zusammen mit der Vergussmasse 101 gezeigt, wobei die Vergussmasse 101 in einem Füllraum 106 (siehe Figur 3) aufgenommen ist und wobei der Füllraum 106 zwischen der mittleren Wandung 105 und der inneren Wandung 104 ausgebildet ist. Die umlaufende äußere Wandung 103 der Vergusswanne 100 weist Absätze bzw. Stufen auf, welche es erlauben, dass Wasser, welches bei einem offenen Motorkonzept eindringen kann, wieder abfließen kann. Hierbei ist das offene Motorkonzept durch das vollständige Eingießen des Maschinenkontaktsystems 5 in Vergussmasse gefahrlos realisierbar. Weiterhin ist durch die Weichkomponente 110 der mittleren Wandung 105 ist ein Höhenausgleich gegenüber der Statorwicklung bzw. den Statorwicklungen geschaffen, so dass fertigungstechnisch bedingte Höhenunterschiede der Statorwicklung bzw. Statorwicklungen durch die Weichkomponente bei Aufrechterhaltung der gewünschten Abdichtung ausgeglichen sind und die Vergusswanne auch keine Beschädigung am Lack der Drähte der Statorwicklung bzw. Statorwicklungen bewirken kann. Aus der Figur 1a bzw. 1b ist ersichtlich, dass der mit der Vergussmasse 101 verfüllte Füllraum 106 und der Stator 4 derart aufeinander angepasst sind, dass ein Maschinenkontaktsystem 5 des Stators 4 in dem Füllraum 106 aufgenommen und damit nach einem Vergießen von der Vergussmasse 101 umgeben ist.

Das Maschinenkontaktsystem 5 umfasst Schaltringe 6, 7, 8 des Stators 4, Schweißanbindungen 9, 10 von Statorwicklungen 11 und die Statorwicklungen 11 des Stators 4. Weiterhin umfasst das Maschinenkontaktsystem 5 nicht im Detail erkennbare Schaltbrücken 12 und Motorkontakte 13a, 13b, wobei in der Schnittdarstellung der Figur 1a nur zwei von drei Motorkontakten sichtbar sind.

Die Vergusswanne 100 ist als Zwei-Komponenten-Bauteil ausgebildet. Hierbei sind der Boden 102, die äußere Wandung 103, ein Kern 107 (siehe insbesondere Figuren 1 und 3) der mittleren Wandung 105 und die innere Wandung 104 als Hartkomponente 108 ausgebildet. Ein Mantel 109, welcher den Kern 107 der mittleren Wandung 105 umgibt ist als Weichkomponente 110 ausgebildet. Die Weichkomponente 110 ist durch Umspritzen des Kerns 107 hergestellt und ist gummiartig elastisch verformbar.

Der Boden 102 der Vergusswanne 101 umfasst eine Öffnung 111. Diese ist durch eine Dichtung 112 verschlossen, wobei die Dichtung 112 ebenso wie der Mantel 109 als Weichkomponente 113 hergestellt ist und gummiartig elastisch verformbar ist. Aus der Figur 3 ist ersichtlich, dass die Dichtung 112 und der Mantel 109 miteinander verbunden sind, so dass die Weichkomponenten 109 und 113 einteilig ausgebildet sind.

Aus der Figur 4 ist ersichtlich, dass die Dichtung 112 drei Tüllen 112a, 112b, 112c umfasst. Diese Tüllen 112a, 112b, 112c ragen über eine Unterseite 102b des Boden 102 der Vergusswanne 100 hinaus und jede der Tüllen 112a, 112b, 112c weist einen Öffnungsschlitz 114a, 114b, 114c zur Durchführung der Motorkontakte 13a, 13b auf. Die Dichtung 112 ist formschlüssig mit dem Boden 102 verbunden und ist mit dem die mittlere Wandung 105 umgebende Mantel 109 einteilig ausgeführt und somit verbunden.

Weiterhin liegt die innere Wandung 104 der Vergusswanne 100 an einem die Schaltringe 6, 7, 8 aufnehmenden unteren Flansch 14 des Stators 4 derart an, dass eine ringförmige Innenwandung 14a des im Querschnitt U-förmigen Flansches 14 eine Erhöhung 115 der inneren Wandung 104 bildet. Hierdurch ist der Füllraum 106 der Vergusswanne 100 vergrößert und es ist möglich, den Füllraum 106 bis über eine Oberkante 104a (sieh Figur 3) der inneren Wandung 104 mit der Vergussmasse 101 zu befüllen. Hierbei ist der Füllraum 106 derart hoch befüllt, dass die Schaltringe 6, 7, 8 vollständig in die Vergussmasse 101 eingebettet sind. Im Bereich der Schaltringe 6, 7, 8 und der Schaltbrücke 12 entsteht beim Vergießen eine auf die Vergussmasse 18 wirkende Kapillarwirkung, so dass die Schaltringe 6, 7, 8 und die Schaltbrücke 12 nach dem Vergießen zuverlässig in die Vergussmasse 18 eingebettet sind.

Bei Ansicht in Richtung einer Längsachse L1 der elektrischen Maschine 1 weist die mittleren Wandung 105 eine zahnradartige Kontur mit vier symmetrisch zu der Längsachse L1 ausgebildeten zahnartigen Ausbuchtungen 116a bis 116d auf. Der zwischen der inneren Wandung 104 und der mittleren Wandung 105 liegende Füllraum 106 erstreckt sich in diese Ausbuchtungen 116a bis 116d.

Ein dem unteren Flansch 14 gegenüberliegender oberer Flansch 15 des Stators 4, die Statorbuchse 3 und eine Oberseite 16a von Statorblechen 16 bilden einen zusätzlichen ringförmigen Füllraum 17. Hierbei ist nur das oberste Statorblech exemplarisch bezeichnet. Dieser zusätzliche Füllraum 17 ist mit Vergussmasse 18 derart ausgegossen, dass die Oberseite 16a der Statorbleche 16 durch die Vergussmasse 18 überdeckt ist. Hierbei ist der obere Flansch 15 des Stators 4 mit dem unteren Flansch 14 des Stators 4 einteilig als Ummantelung der Statorbleche 16 in Form einer Umspritzung 19 ausgebildet.

Das erfindungsgemäße Verfahren zur Herstellung einer elektrischen Maschine, welche die Statorbuchse 3, die Vergusswanne 100 und einen Stator 4 umfasst, umfasst die Schritte:
- Aufsetzen der Vergusswanne 100 auf die Statorbuchse 3,
- Aufpressen des Stators 4 auf die Statorbuchse 3, derart, dass die Vergussewanne 100 zwischen der Statorbuchse 3 und dem Stator 4 gehalten ist und ein Maschinenkontaktsystem 5 des Stators 4 in den zwischen der inneren Wandung 104 und der mittleren Wandung 105 der Vergusswanne 100 ausgebildeten Füllraum 106 eingeschoben werden,
- Ausgießen des Füllraums 106 mit der Vergussmasse 101 derart, dass das Maschinenkontaktsystem 5 des Stators 4 in die Vergussmasse 100 eingebettet wird.

Hierbei wird das Maschinenkontaktsystem 5 durch die Schaltringe 6, 7, 8 des Stators 4 und Schweißanbindungen 9, 10 von Statorwicklungen 11 und Statorwicklungen 11 des Stators 4 und Schaltbrücken 12 und Motorkontakte 13a, 13b gebildet, welche allesamt elektrische Komponenten bilden.

In der Figur 3 sind an der Hartkomponente 108 der Vergusswanne 100 ausgebildete Stege 117a, 117b im Bereich der Tülle 112a exemplarisch bezeichnet. Diese dienen als Einführhilfe für die Motorkontakte. Derartige Stege sind auch im Bereich der Tülle 112b und 112c vorhanden.

Die Vergussmasse 101 ist in der Figur 1 nahe der Schweißanbindungen 9 und 10 abschnittsweise ausgeblendet dargestellt, um Bezugszeichenlinien nicht zu verdecken. Weiterhin ist in der Figur 1a die linke Hälfte der weiteren Vergussmasse 18 ebenfalls ausgeblendet, um Bezugszeichenlinien nicht zu verdecken. In der Figur 2 ist die Vergussmasse 101 ohne Einfärbung dargestellt.

Ein zwischen der mittleren Wandung 105 und der äußeren Wandung 103 liegender Bereich der Vergusswanne 100 umfasst neben seiner Funktion als Abdeckung zusätzlich die Funktion eines Tropfschutzes. Somit stellt ein Überlaufen von kleineren Mengen der Vergussmasse 101 kein Problem dar und erfodert keine Nacharbeit.

### Bezugszeichenliste:

- 1: elektrische Maschine
- 2: Elektromotor
- 3: Statorbuchse
- 4: Stator
- 5: Maschinenkontaktsystem
- 6, 7, 8: Schaltring
- 9, 10: Schweißanbindung
- 11: Statorwicklung
- 12: Schaltbrücke
- 13a, 13b: Motorkontakt
- 14: unterer Flansch von 4
- 14a: ringförmige Innenwandung von 14
- 15: oberer Flansch von 4
- 16: Statorblech
- 16a: Oberseite von 16
- 17: Füllraum
- 18: Vergussmasse
- 19: Umspritzung

- 100: Vergusswanne
- 101: Vergussmasse
- 102: kreisringartiger Boden
- 102b: Unterseite von 102
- 103: erste, umlaufende äußere Wandung
- 104: zweite, umlaufende innere Wandung
- 104a: Oberkante von 104
- 105: dritte, umlaufende mittlere Wandung
- 106: Füllraum
- 107: Kern von 105
- 108: Hartkomponente von 100
- 109: Mantel
- 110: Weichkomponente von 100
- 111: Öffnung von 100
- 112: Dichtung von 100
- 112a-112c: Tülle
- 113: weitere Weichkomponente
- 114a-114c: Öffnungsschlitz
- 115: Erhöhung von 104
- 116a-116d: zahnartige Ausbuchtung von 105
- 117a, 117b: Steg an 108

- L1: Längsachse von 1

## Patentansprüche

1. Elektrische Maschine (1) umfassend
- eine Statorbuchse (3),
- eine Vergusswanne (100),
- eine Vergussmasse (101) und
- einen Stator (4),
- wobei die Vergusswanne (100) einen kreisringartigen Boden (102), eine erste, umlaufende äußere Wandung (103) und eine zweite umlaufende innere Wandung (104) umfasst,
- wobei die Vergussmasse (101) in einem Füllraum (106) aufgenommen ist,
**dadurch gekennzeichnet,**
- **dass** die Vergusswanne (100) eine dritte, zwischen der äußeren Wandung (103) und der inneren Wandung (104) umlaufende mittlere Wandung (105) umfasst,
- wobei der Füllraum (106) zwischen der mittleren Wandung (105) und der inneren Wandung (104) ausgebildet ist.
- **dass** die innere Wandung (104) der Vergusswanne (100) an einem Schaltringe (6, 7, 8) aufnehmenden unteren Flansch (14) des Stators (4) derart anliegt, dass eine ringförmige Innenwandung (14a) des Flansches (14) eine Erhöhung der inneren Wandung (104) bildet, so dass der Füllraum (106) bis über eine Oberkante (104a) der inneren Wandung (104) mit der Vergussmasse (101), insbesondere derart hoch befüllt ist, dass die Schaltringe (6, 7, 8) vollständig in die Vergussmasse (101) eingebettet sind.

2. Elektrische Maschine nach Anspruch 1, **dadurch gekennzeichnet, dass** der Füllraum (106) und der Stator (4) derart aufeinander angepasst sind, dass ein Maschinenkontaktsystem (5) des Stators (4) in dem Füllraum (106) aufgenommen und von der Vergussmasse (101) umgeben ist.

3. Elektrische Maschine nach Anspruch 2, **dadurch gekennzeichnet, dass** das Maschinenkontaktsystem (5) Schaltringe (6, 7, 8) des Stators (4) oder Schweißanbindungen (9, 10) von Statorwicklungen (11) oder Statorwicklungen (11) des Stators (4) oder Schaltbrücken (12) undoder Motorkontakte (13a, 13b) umfasst.

4. Elektrische Maschine nach Anspruch 2, **dadurch gekennzeichnet, dass** das Maschinenkontaktsystem (5) Schaltringe (6, 7, 8) des Stators (4) und Schweißanbindungen (9, 10) von Statorwicklungen (11) und Statorwicklungen (11) des Stators (4) und Schaltbrücken (12) und Motorkontakte (13a, 13b) umfasst.

5. Elektrische Maschine nach wenigstens einem der vorhergehenden Ansprüche, **dadurch gekennzeichnet,**
- **dass** die Vergusswanne (100) als Zwei-Komponenten-Bauteil ausgebildet ist,
- **dass** der Boden (102), die äußere Wandung (103), ein Kern (107) der mittleren Wandung (105) und die innere Wandung (104) als Hartkomponente (108) ausgebildet sind und
- **dass** ein den Kern (107) der mittleren Wandung (105) umgebender Mantel (109) als Weichkomponente (110) ausgebildet ist,
- wobei die Weichkomponente (110) insbesondere durch Umspritzen des Kerns (107) hergestellt ist und wobei die Weichkomponente (110) gummiartig elastisch verformbar ist.

6. Elektrische Maschine nach Anspruch 1, **dadurch gekennzeichnet, dass** die Vergusswanne (100) zwischen der inneren Wandung (104) und der mittleren Wandung (105) in dem kreisringartigen Boden (102) eine Öffnung (111) aufweist, wobei die Vergusswanne (100) als weitere Weichkomponente (113) eine Dichtung (112) für Motorkontakte (13a, 13b) umfasst, wobei die Öffnung (111) durch die Dichtung (112) verschlossen ist und wobei die Dichtung (111) insbesondere formschlüssig mit dem Boden (102) verbunden ist und dass es insbesondere auch vorgesehen ist, dass die Dichtung (111) und der die mittlere Wandung (105) umgebende Mantel (109) miteinander verbunden sind.

7. Elektrische Maschine nach wenigstens einem der vorhergehenden Ansprüche, **dadurch gekennzeichnet, dass** die mittleren Wandung (105) bei Ansicht in Richtung einer Längsachse (L1) der elektrischen Maschine (1) eine zahnradartige Kontur aufweist und wenigstens zwei, insbesondere symmetrisch zu der Längsachse (L1) ausgebildete, zahnartige Ausbuchtungen (116a-116d) aufweist, wobei sich der Füllraum (106) in diese Ausbuchtungen (116a-116d) erstreckt.

8. Elektrische Maschine nach wenigstens einem der vorhergehenden Ansprüche, **dadurch gekennzeichnet, dass** ein oberer Flansch (15) des Stators (4), die Statorbuchse (3) und die Oberseite (16a) der Statorbleche (16) einen ringförmigen Füllraum (17) bilden, wobei der ringförmige Füllraum (17) mit Vergussmasse (18) derart ausgegossen ist, dass die Oberseite (16a) der Statorbleche (16) durch die Vergussmasse (18) überdeckt ist und wobei es insbesondere vorgesehen ist, dass der obere Flansch (15) des Stators (4) mit dem unteren Flansch (14) des Stators (49 einteilig, insbesondere als Ummantelung der Statorbleche (16) in Form einer Umspritzung (19) ausgebildet ist.

9. Verfahren zur Herstellung einer elektrischen Maschine (1), welche insbesondere nach einem der vorhergehenden Ansprüche ausgebildet ist und welche eine Statorbuchse (3), eine Vergusswanne (100) und einen Stator (4) umfasst, umfassend die Schritte:
- Aufsetzen der Vergusswanne (100) auf die Statorbuchse (3),
- Aufpressen des Stators (4) auf die Statorbuchse (3), derart, dass die Vergusswanne (100) zwischen der Statorbuchse (3) und dem Stator (4) gehalten ist und ein Maschinenkontaktsystem (5) des Stators (4) in einen zwischen einer inneren Wandung (104) und einer mittleren Wandung (105) der Vergusswanne (100) ausgebildeten Füllraum (106) eingeschoben wird,
- Ausgießen des Füllraums (106) mit einer Vergussmasse (101) derart, dass das Maschinenkontaktsystem (5) des Stators (4) in die Vergussmasse (101) eingebettet wird.
- dass das Maschinenkontaktsystem (5) durch Schaltringe (6, 7, 8) des Stators (4) und Schweißanbindungen (9, 10) von Statorwicklungen (11) und Statorwicklungen (11) des Stators (4) und Schaltbrücken (12) und Motorkontakte (13a, 13b) gebildet wird.

10. Verfahren zur Herstellung einer elektrischen Maschine nach Anspruch 9, **dadurch gekennzeichnet, dass** die Statorwicklungen (11) mit Vergussmasse übergossen werden und dass ein zusätzlicher Füllraum (17) mit Vergussmasse (18) gefüllt wird.

11. Verfahren zur Herstellung einer elektrischen Maschine nach Anspruch 9 oder 10, **dadurch gekennzeichnet, dass** die elektrische Maschine (1) entsprechend wenigstens einem der Ansprüche 1 bis 8 ausgebildet ist.

## Claims

1. Electric machine (1) comprising
- a stator bushing (3),
- a potting trough (100),
- a potting compound (101) and
- a stator (4),
- wherein the potting trough (100) comprises a circular-ring-like base (102), a first circumferential outer wall (103) and a second circumferential inner wall (104),
- wherein the potting compound (101) is received in a filling space (106),
**characterized in that**
- **in that** the potting trough (100) comprises a third central wall (105), which runs around between the outer wall (103) and the inner wall (104),
- wherein the filling space (106) is formed between the central wall (105) and the inner wall (104),
- **in that** the inner wall (104) of the potting trough (100) bears against a lower flange (14) of the stator (4), the lower flange receiving connection rings (6, 7, 8), in such a way that an annular inner wall (14a) of the flange (14) forms an raised portion of the inner wall (104), so that the filling space (106) is filled with the potting compound (101) to above an upper edge (104a) of the inner wall (104), in particular to such an extent that the connection rings (6, 7, 8) are completely embedded in the potting compound (101).

2. Electric machine according to Claim 1, **characterized in that** the filling space (106) and the stator (4) are adapted to one another in such a way that a machine contact system (5) of the stator (4) is received in the filling space (106) and is surrounded by the potting compound (101).

3. Electric machine according to Claim 2, **characterized in that** the machine contact system (5) comprises connection rings (6, 7, 8) of the stator (4) or welding connections (9, 10) of stator windings (11) or stator windings (11) of the stator (4) or switching bridges (12) and/or motor contacts (13a, 13b).

4. Electric machine according to Claim 2, **characterized in that** the machine contact system (5) comprises connection rings (6, 7, 8) of the stator (4) and welding connections (9, 10) of stator windings (11) and stator windings (11) of the stator (4) and switching bridges (12) and motor contacts (13a, 13b).

5. Electric machine according to at least one of the preceding claims, **characterized**
- **in that** the potting trough (100) is formed as a two-component part,
- **in that** the base (102), the outer wall (103), a core (107) of the central wall (105) and the inner wall (104) are formed as a hard component (108), and
- **in that** a casing (109) surrounding the core (107) of the central wall (105) is formed as a soft component (110),
- wherein the soft component (110) is produced in particular by overmoulding the core (107), and wherein the soft component (110) is elastically deformable in the manner of rubber.

6. Electric machine according to Claim 1, **characterized in that** the potting trough (100) has an opening (111) between the inner wall (104) and the central wall (105) in the circular-ring-like base (102), wherein the potting trough (100) comprises, as a further soft component (113), a seal (112) for motor contacts (13a, 13b), wherein the opening (111) is closed by the seal (112), and wherein the seal (111) is connected in particular in a form-fitting manner to the base (102), and **in that** in particular provision is also made for the seal (111) and the casing (109) surrounding the central wall (105) to be connected to each other.

7. Electric machine according to at least one of the preceding claims, **characterized in that** the central wall (105), when viewed in the direction of a longitudinal axis (L1) of the electric machine (1), has a gearwheel-like contour and has at least two tooth-like bulges (116a-116d) formed in particular symmetrically with respect to the longitudinal axis (L1), wherein the filling space (106) extends into these bulges (116a-116d).

8. Electric machine according to at least one of the preceding claims, **characterized in that** an upper flange (15) of the stator (4), the stator bushing (3) and the top side (16a) of the stator laminations (16) form an annular filling space (17), wherein potting compound (18) is poured into the annular filling space (17) in such a way that the top side (16a) of the stator laminations (16) is covered by the potting compound (18), and wherein in particular provision is made for the upper flange (15) of the stator (4) to be formed integrally with the lower flange (14) of the stator (4), in particular as sheathing of the stator laminations (16) in the form of an overmoulding (19).

9. Method for producing an electric machine (1) which is formed in particular according to one of the preceding claims and which comprises a stator bushing (3), a potting trough (100) and a stator (4), comprising the steps of:
- placing the potting trough (100) onto the stator bushing (3),
- pressing the stator (4) onto the stator bushing (3) in such a way that the potting trough (100) is held between the stator bushing (3) and the stator (4) and a machine contact system (5) of the stator (4) is pushed into a filling space (106) formed between an inner wall (104) and a central wall (105) of the potting trough (100),
- pouring a potting compound (101) into the filling space (106) in such a way that the machine contact system (5) of the stator (4) is embedded in the potting compound (101),
- that the machine contact system (5) is formed by connection rings (6, 7, 8) of the stator (4) and welding connections (9, 10) of stator windings (11) and stator windings (11) of the stator (4) and switching bridges (12) and motor contacts (13a, 13b).

10. Method for producing an electric machine according to Claim 9, **characterized in that** potting compound is poured over the stator windings (11), and **in that** an additional filling space (17) is filled with potting compound (18).

11. Method for producing an electric machine according to Claim 9 or 10, **characterized in that** the electric machine (1) is formed in accordance with at least one of Claims 1 to 8.

## Revendications

1. Machine électrique (1) comprenant
- une douille de stator (3),
- un bac d'enrobage (100),
- une masse d'enrobage (101) et
- un stator (4),
- le bac d'enrobage (100) comprenant un fond annulaire (102), une première paroi extérieure (103) circonférentielle et une deuxième paroi intérieure (104) circonférentielle,
- la masse d'enrobage (101) étant reçue dans un espace de remplissage (106),
**caractérisée**
- **en ce que** le bac d'enrobage (100) comprend une troisième paroi médiane (105) circonférentielle située entre la paroi extérieure (103) et la paroi intérieure (104),
- l'espace de remplissage (106) étant formé entre la paroi médiane (105) et la paroi intérieure (104),
- **en ce que** la paroi intérieure (104) du bac d'enrobage (100) repose sur une bride inférieure (14) du stator (4) recevant des anneaux de commutation (6, 7, 8) de telle sorte qu'une paroi intérieure annulaire (14a) de la bride (14) forme une surélévation de la paroi intérieure (104), de sorte que l'espace de remplissage (106) est rempli de la masse d'enrobage (101) jusqu'au-dessus d'un bord supérieur (104a) de la paroi intérieure (104), en particulier de manière à ce que les anneaux de commutation (6, 7, 8) soient entièrement noyés dans la masse d'enrobage (101).

2. Machine électrique selon la revendication 1, **caractérisée en ce que** l'espace de remplissage (106) et le stator (4) sont adaptés l'un à l'autre de telle sorte qu'un système de contact de machine (5) du stator (4) soit reçu dans l'espace de remplissage (106) et soit entouré de la masse d'enrobage (101).

3. Machine électrique selon la revendication 2, **caractérisée en ce que** le système de contact de machine (5) comprend des anneaux de commutation (6, 7, 8) du stator (4) ou des raccordements soudés (9, 10) d'enroulements de stator (11) ou des enroulements de stator (11) du stator (4) ou des ponts de commutation (12) et/ou des contacts de moteur (13a, 13b).

4. Machine électrique selon la revendication 2, **caractérisée en ce que** le système de contact de machine (5) comprend des anneaux de commutation (6, 7, 8) du stator (4) et des raccordements soudés (9, 10) d'enroulements de stator (11) et des enroulements de stator (11) du stator (4) et des ponts de commutation (12) et des contacts de moteur (13a, 13b).

5. Machine électrique selon au moins l'une des revendications précédentes, **caractérisée**
- **en ce que** le bac d'enrobage (100) est réalisé sous forme de composant à deux éléments,
- **en ce que** le fond (102), la paroi extérieure (103), un noyau (107) de la paroi médiane (105) et la paroi intérieure (104) sont réalisés sous forme de composant dur (108) et
- **en ce qu'**un revêtement (109) entourant le noyau (107) de la paroi médiane (105) est réalisé sous forme de composant souple (110),
- le composant souple (110) étant en particulier fabriqué par surmoulage du noyau (107) et le composant souple (110) étant élastiquement déformable à la façon du caoutchouc.

6. Machine électrique selon la revendication 1, **caractérisée en ce que** le bac d'enrobage (100) présente une ouverture (111) dans le fond annulaire (102) entre la paroi intérieure (104) et la paroi médiane (105), le bac d'enrobage (100) comprenant un joint d'étanchéité (112) pour des contacts de moteur (13a, 13b) sous la forme d'un autre composant souple (113), l'ouverture (111) étant fermée par le joint d'étanchéité (112) et le joint d'étanchéité (111) étant en particulier relié par complémentarité de forme au fond (102) et **en ce qu'**il est en particulier également prévu que le joint d'étanchéité (111) et le revêtement (109) entourant la paroi médiane (105) soient reliés entre eux.

7. Machine électrique selon au moins l'une des revendications précédentes, **caractérisée en ce que** la paroi médiane (105) présente un contour en forme d'engrenage lorsqu'elle est vue dans la direction d'un axe longitudinal (L1) de la machine électrique (1) et présente au moins deux renflements en forme de dents (116a-116d), en particulier formés symétriquement par rapport à l'axe longitudinal (L1), l'espace de remplissage (106) s'étendant dans ces renflements (116a-116d).

8. Machine électrique selon au moins l'une des revendications précédentes, **caractérisée en ce qu'**une bride supérieure (15) du stator (4), la douille de stator (3) et la face supérieure (16a) des tôles de stator (16) forment un espace de remplissage annulaire (17), l'espace de remplissage annulaire (17) étant rempli de masse d'enrobage (18) de telle sorte que la face supérieure (16a) des tôles de stator (16) soit recouverte par la masse d'enrobage (18) et dans laquelle il est en particulier prévu que la bride supérieure (15) du stator (4) soit réalisée d'un seul tenant avec la bride inférieure (14) du stator (4), en particulier comme revêtement des tôles de stator (16) sous la forme d'un surmoulage (19).

9. Procédé de fabrication d'une machine électrique (1), laquelle est en particulier conçue selon au moins l'une des revendications précédentes et laquelle comprend une douille de stator (3), un bac d'enrobage (100) et un stator (4), comprenant les étapes suivantes :
- mise en place du bac d'enrobage (100) sur la douille de stator (3),
- pressage du stator (4) sur la douille de stator (3), de telle sorte que le bac d'enrobage (100) soit maintenu entre la douille de stator (3) et le stator (4) et qu'un système de contact de machine (5) du stator (4) soit inséré dans un espace de remplissage (106) formé entre une paroi intérieure (104) et une paroi médiane (105) du bac d'enrobage (100),
- remplissage de l'espace de remplissage (106) d'une masse d'enrobage (101) de telle sorte que le système de contact de machine (5) du stator (4) soit noyé dans la masse d'enrobage (101),
- en ce que le système de contact de machine (5) est formé par des anneaux de commutation (6, 7, 8) du stator (4) et des raccordements soudés (9, 10) d'enroulements de stator (11) et des enroulements de stator (11) du stator (4) et des ponts de commutation (12) et des contacts de moteur (13a, 13b).

10. Procédé de fabrication d'une machine électrique selon la revendication 9, **caractérisé en ce que** les enroulements de stator (11) sont recouverts de masse d'enrobage et **en ce qu'**un espace de remplissage supplémentaire (17) est rempli de masse d'enrobage (18).

11. Procédé de fabrication d'une machine électrique selon la revendication 9 ou 10, **caractérisé en ce que** la machine électrique (1) est conçue conformément à au moins l'une des revendications 1 à 8.
